# EUROPEAN PATENT SPECIFICATION

(11) **EP 4 032 791 B1**
(45) Date of publication and mention of the grant of the patent: **12.03.2025**
(21) Application number: 22152715.3
(22) Date of filing: 21.01.2022
(51) Int. Cl.: B62J 9/28, B62J 50/25, B62J 9/30, G09F 21/04, G09F 9/35, G09F 27/00

(54) **A PARCEL TRANSPORT CONTAINER, ASSEMBLY AND MONITORING SYSTEM**
PAKETTRANSPORTBEHÄLTER, MONTAGE- UND ÜBERWACHUNGSSYSTEM
RÉCIPIENT DE TRANSPORT DE COLIS, SYSTÈME D'ASSEMBLAGE ET DE SURVEILLANCE

(30) Priority: 22.01.2021 NL 2027366
(43) Date of publication of application: 27.07.2022
(73) Proprietor: Tennan, Ismail, 1067 HN Amsterdam (NL)
(72) Inventor: Tennan, Khalid, Amsterdam (NL); Balali, Jamal, Amsterdam (NL); Tennan, Ismael, Amsterdam (NL)
(74) Representative: Leeger, Ferdinand Christiaan

(56) References cited:
- EP-A1- 3 358 521
- WO-A2-2020/002866
- AU-A4- 2001 100 070
- CN-A- 112 233 571
- CN-Y- 201 037 020
- FR-A1- 2 979 305
- JP-U- 3 151 608
- US-A1- 2014 042 200
- US-B1- 10 783 559

## Description

The invention relates to food parcel transport containers with digital displays for showing advertisements.

Presently, transport containers use posters on the side of delivery boxes for advertising to passersby. Usually, such boxes are simultaneously used for parcel delivery. Thus, enabling the dual use of the box as a delivery and awareness platform. Usually, such boxes are provided with LED's for highlighting the posters. When such posters inevitably become obsolete they are removed and discarded. This is generally considered cumbersome and wasteful. Such posters are usually laminated with plastic to weather environmental influences making the discarded posters an environmental burden. Posters which are not laminated tend to flake during transport, or stick unevenly causing such posters to be only partially removed from a delivery box when their usefulness expires. The latter contaminates the delivery box surface and prevents the placement of any subsequent poster or may even otherwise yield an irregular viewing surface. The latter may have a discouraging effect on a potential onlooker, potentially leaving a negative impression on the viewer of the poster. This is undesirable from an advertising perspective.

Document US 10783559 B1 discloses a food parcel transport container, comprising: a main housing defining an inner volume suitable for transporting parcels; a plurality of digital displays; and a mounting part for mounting the container to an L1-L5 category vehicle or a bicycle; a mobile communication device arranged for receiving digital content over a wireless connection; and a central controller arranged for the synchronous controlling of the plurality of displays based on the received digital content and instructions and wherein the container is adapted to be part of a plurality of containers which display of content is centrally controlled from a distance, wherein the container designed to be synchronized in the display of digital content with other containers in a swarm of multiple containers within a predetermined geographic area through communication with a central server.

Document FR 2979305 A1 shows another example of a transport container having build-in digital advertisement displays that can be remotely controlled.

Document CN 201037020 Y shows a transport container provided with secondary housings for receiving advertisement displays.

The present invention is defined by claim 1 and aims to provide an alternative transport carrier which aims to tackle the cumbersome nature of advertisement rotation, or at least provide a useful green alternative to existing technologies.

According to a first aspect of the invention there is provided a food parcel transport container, comprising: - a main housing defining an inner volume suitable for transporting parcels; - a number of digital displays; - a number of secondary housings each defining a pocket, an inner space, for substantially entirely enclosing at least one digital display of the number of displays therein; and - a mounting part for mounting the container to an L1-L5 category vehicle. Each secondary housing of the number of secondary housings comprises a viewing portion for allowing the at least one digital display to be viewed therethrough by an outside observer. Each secondary housing is also reversibly lockable so that opening the secondary housing allows a user to access the at least one display for the removal thereof, and so that locking the secondary housing prevents the at least one display from being removed from the secondary housing. Beneficially, the system no longer relies on paper, thus reducing the amount of laminated waste that is produced. Beneficially, the number digital displays may be designed for being preloaded with a digital content, such as a plurality of images, which can be shown in sequence. This allows for shown content to be rotated without producing waste. An added benefit of the construction according to the first aspect of the invention is that the screens are protected against theft. Optionally, the container may be provided with a bumper, such as made of rubber, wherein the bumper extends outward from the container beyond the secondary housing. Alternatively, each of the number of secondary housings is provided with a frame, an upstanding edge of which extending in an outward direction with respect to the container, such as 0.1 mm - 5 cm from the surface of a contained digital display. This beneficially provides the screen with fall protection, such as when carried or when mounted on a vehicle. It shall be understood that a L1-L5 category vehicle means the L1-L5 as category vehicles as per European Union Regulation 168/2013, consisting of L1e-A an electrically powered bicycle, L1e-B a two-wheel moped, L2e a three-wheel moped, L3e motorcycle, L4e a motorcycle with a side car, and L5 a tricycle. It is noted that a scooter is also considered to be a moped. The mounting part may be a first part of a two-part connector, wherein the second part is fixed to the vehicle, and wherein the first and second parts are cooperatively arranged for reversibly fixing the container to the vehicle. This allows the container to be easily installed, as such a fixing system universalizes the connection with any respective vehicle within the L1-L5 category. Each of the number of displays may be an LCD-screen, a plasma screen, a tablet, or an electronic photo albums. The container is part of a plurality, also known as a swarm, of containers which display of content is centrally controlled and synchronized from a distance, such as via a human interface associated with a distant server. To this end the container is provided with a mobile communication device and a central controller.

Separately from the above, the container may be provided with a light for illuminating the inner volume of the container. This light is provided with a sensor for detecting the opening of a lid of the container so that the light is activated when the lid is opened, and deactivated when the lid is closed. The light may draw power from a central power storage, such as a battery, and/or from the vehicle if it is mounted to a vehicle. This allows increased visibility when the battery needs to be replaced.

The container itself may be designed, such as through saving on the material thickness of the main housing, or by careful material selection, and/or simply by choosing the size of the container, so that it does not exceed 15 kg, preferably 12kg. That is to say that it is made to weigh 5-12kg without parcels. This allows it to remain portable when disconnected from a vehicle. Specifically, at this weight the operation of an L1-L5 category vehicle is experienced as pleasant, without shifting the center of mass to such an extent that operating the vehicle or bicycle would become too cumbersome by the user.

Another functionality may be found in the main housing which can be designed as a food delivery box and wherein the number of digital displays is equal to or fewer than the number of lateral faces of the main housing, such as three, and wherein the number of secondary housings is equal to the number of displays. In this setup the bottom face and top face of the box are not visible to people on the street. As such, the four lateral sides of the box are relevant for advertising. One of the sides, interchangeably used with the term faces, may comprise a door, for accessing the inner volume, thus arriving at the number three. It may also be four, if one wishes to include the door, or two, if one wishes to exclude the part of the box facing the operator of the vehicle. In one example the box, interchangeably used with container, is assembled with the vehicle such that the door faces the user. Thus again arriving at three advertising faces. This beneficially optimizes the use of advertising space on the box. The amount of digital displays is preferably three, wherein a lid to inner volume opens towards the seat of the driver on the vehicle which lid itself contains no display. Also in the case of a container carried by the user, the lid need not contain a display, and may even be designed with a profile to comfortably rest against the back of a user while being carried.

According to the invention, the container comprises:
- a mobile communication device arranged for receiving digital content, such as at least one digital image, over a wireless connection; and
- a central controller arranged for the synchronized controlling of the number of displays based on the received digital content.

This prevents screens from desyncing with each other to switch between advertisements at different times. It also beneficially removes any and all need to remove the devices for uploading new digital content to it, or for replacing a memory card for example with a new preloaded set of images. This allows for less cumbersome operations. It is noted that the mobile communications device is merely a transmitter-receiver for facilitating communications between a distant server and the controller over a telecommunication network, such as by means of 3G, 4G, 5G and more. The device may alternatively be a smartphone and does not need to be provided within any sort of separate compartment. Rather, such a smartphone may be communicatively connected to the controller via Bluetooth for controlling the number of displays. Optionally, the smartphone may be provided with an app to this end, and may even allow a user to select on the smartphone which images to display. Alternatively the smartphone may be used to connect to a display directly via Bluetooth, such as when the display is a tablet.

In another feature the container may comprise a charging port such as a USB-port on an outer part of the main housing, for charging external devices using the central power source, and wherein optionally the port comprises a removable cover.

In another option further to the above the container may comprise a central power source, such as a battery, such as Lithium ion battery, for powering the number of displays, the communication device and the central controller. This beneficially allows the system to operate electrically independent and prevents the system from draining the battery of the vehicle, thus preventing the reduction of its effective radius, such as in e-bikes, or fuel efficiency, such as in conventionally powered vehicles. Optionally, the battery may be charged from a central power connection which is comprised by the container. The container may also comprise a solar panel which may charge the central power source during the day.

In yet another option, there may be provided a central power switch for turning all electrical components of the container on and off. The electrical components would in the example of claim 1 comprise the number of displays, but in claim 3 the number of displays, the mobile communication device and the central controller. This makes operations less cumbersome as central shutdown prevents a user from having to turn each display on or off individually, if there are more than one, and to do so without opening the relevant secondary housing. This option is combinable with every option and aspect of the invention.

In yet a further option the inner volume of the main housing is partitioned into an electronics compartment and a parcel compartment for separately storing the power source, the communication device and the central controller from the parcels, and wherein the electronics compartment is accessible from the parcel compartment by a user via a removably securable panel to the main housing. This allows parcels to never be forgotten inside of the box as this construction allows them to be always discovered prior to accessing electronics. It shall be understood that the parcel compartment may be a food compartment.

Optionally, further to the above the panel may comprise through-holes for allowing heat from the electronics compartment to dissipate into at least a part of the food compartment. This increases the efficiency of keeping food parcels warm.

In another example combinable with any of the preceding options or the first claim the viewing portion is made of a transparent material, such as a transparent polymer, such as plexiglass. This allows the screen to be visible through the viewing portion yet protected. More particularly each of the secondary housings may closed to water, beneficially increasing the longevity of the displays.

In yet another option each of the number secondary housings may be integrated with or attached to a lateral face of the main housing. In order to safeguard the screens against falling damage the outer surfaces of the main housing may be made to be substantially flush with a corresponding outer surface of the secondary housings. The secondary housings do not need to project from the housing, and may form a sort of side compartment to the main body. This design safeguards the screens against falling damage.

The container may be furnished with a charging port, such as a USB-port on an outer part of the main housing, for charging external devices using the central power source, and wherein optionally the port comprises a removable cover. This beneficially allows a someone operating the vehicle to charge their device, such as ones phone for receiving delivery instructions.

According to a second aspect of the invention the container is assembled with an L1-L5 category vehicle as per European Union Regulation 168/2013, namely one of: - L1e-A an electrically powered bicycle, - L1e-B a two-wheel moped;- L2e a three-wheel moped; - L3e motorcycle; - L4e a motorcycle with a side car, and - L5 a tricycle, such as via the mounting part. The vehicle is then fitted with a corresponding mounting part to cooperate with the mounting part of the container. Alternatively, the container is assembled with a bicycle, such as a non-electric bicycle, such as via the mounting part. The bicycle is then fitted with a corresponding mounting part to cooperate with the mounting part of the container

Optionally, the vehicle or the container comprises a GPS-unit for determining the geographical location of the assembly. Beneficially the location information allows for tracking both parcel delivery and advertising location exposure. Based on GPS data certain delivery personnel may be diverted to take an alternative route such as to increase advertisement coverage.

According to yet another aspect of the invention there is provided a remote control system for controlling the digital display of content by comprising: - a plurality, also known as a swarm, of containers, wherein each container is a parcel transport container according to at least claim 3; and - a distant server or computer arranged for wirelessly communicating digital content and/or instructions, such as over a mobile communications network, to the mobile communication device of each of the parcel transport containers for controlling the content that is displayed thereon. Each container of the swarm may also be designed to relay geographical location information about said container to the distant server. Such information can be based on known communication tower signals, but may alternatively also be derived from GPS data. The server would in this example comprise a human interface that is accessible to a user, and wherein the distant server communicates the digital content and/or instructions to each container based on a change in its geographical location and/or time of day, and is designed so as to at least one of:
- allow the user to track and represent the movement of the swarm in a map;
- allow the user to manually select individual containers of the swarm and control the content that is displayed thereon; and
- allow the user to manually select multiple containers of the swarm and simultaneously control the content that is displayed thereon;
- allow for the digital content to be uploaded to the system and/or selected from within the system, wherein the user is allowed to preset the geographical area and time period for which the swarm will show said content.

It should be understood that content can be uploaded to the system by providing the content to the server or at least one container of the swarm. The user interface here may be understood to act as a centralized coordination terminal for the swarm, and may be a phone, tablet, laptop or computer that is connected to the server, which receives the information from the swarm. The human interface and server may also both be integrated into a single laptop or computer. It should be understood that allowing a user to perform an action is accomplished by the human interface being provided with interactive portions, and wherein the system is designed for providing the corresponding content/instructions to the containers of the swarm and/or retrieving and compiling information, such as live information, on the location of the swarm for display.

The term swarm is understood to mean a plurality of units, in this case containers, for which movement and behavior is coordinated by the group, such as through a centralized command unit. Behavior would here refer to a synchronous or dyssynchronous showing of content of sub-groups within the swarm, or the entire swarm, in a particular geographical area at a particular time. A centralized command unit may here be a server to which the units are communicatively connected, and wherein the behavior is preordained through the design and variable programming of the server, which according to the invention can be influenced by a user through a human interface associated with said server. That is to say, the server may be provided with new content and instructions for a particular day, week or any other period so as to allow the server to automatically control the behavior of the swarm throughout said period. The human interface may allow individual subjects to be selected by the user and to be instructed so as to have their own distinct behavior separate from the swarm or sub-group in a particular area and time. To this end the server may be designed so as to allow digital content to be imported to and selected from a digital library so as to allow the distinct behavioral instructions to be selected. The human interface may further allow the user to take instantaneous control of the entire swarm so as to overrule the preordained behavior through a single button or switch, designed to instantaneous synchronize the entirety of the swarm to the same content.

Beneficially the system is designed to log geographical location and time information of the swarm, and wherein the system is designed to represent display the route of each container on the map between two points in time to the user, and wherein optionally, the system is designed such that the user can select the two points in time on the human interface.

Further to the above the digital content may comprises an image, and wherein the instruction relate to at least one of initiating the showing of the image and ceasing to show the image, such as at a time and/or over a predetermined period of time. Particular images may even be queued for being shown on the displays if a particular time and/or location requirement is met. As such, instructions may also comprise location information.

Optionally, the system comprises a single switch, or digital representation of a switch, on the human interface, wherein the system is designed such that when pressed or selected by a user, the system synchronizes all containers in the swarm to show the identical visual and/or audio content. The switch may be a button. That is to say, a single master button may serve to allow a user to use the swarm to propagate a single message. In one example, temporary discounts may be offered only available to those who see the message. Thus, incentivizing people to pay attention to the containers. Repeating the pressing or selecting of the switch can further be arranged to return the system to previous programming, or returning the containers of the swarm to each show different content or content corresponding to their time and location. Additionally optionally, the parcel transport container is mounted to an L1-L5 category vehicle as per European Union Regulation 168/2013 comprising a GPS-unit, and wherein the distant server or computer is communicatively arranged with the GPS-unit for receiving the GPS information therefrom, such as a driven route over time. Alternatively, the transport carrier is provided with its own GPS unit to the same effect as described herein above.

The container may further be programmed so as to be automatically time synchronized in the display of digital content with other containers in a swarm of multiple containers within a predetermined geographic area through communication with a central server. The container is designed to break synchronicity based on geographic area as a consequence of a user command through a human interface associated with central server so as to assume either a global synchronicity with all containers of the swarm or a temporary dyssynchronous individual show of content. This beneficially allows a user of a box to move between planned and unplanned commercial programming. Understandably, the controller of the container is programmed and designed for the previously mentioned interactions. Synchronicity means that the same digital content is shown at the same time by different containers of the swarm. Dyssynchronous means that different content is shown at the same time by different containers of the swarm. Global synchronicity means that the same digital content is shown at the same time by all containers of the swarm.

Besides being connected to a vehicle it may be considered that a user carries the container much like a backpack, thus allowing the user to still operate an L1-L5 category vehicle or bicycle. In this aspect of the invention a portable parcel transport container, such as a food parcel transport container, comprises:
- a main housing defining an inner volume suitable for transporting parcels;
- a number of digital displays; and
- a number of secondary housings each defining a pocket for substantially entirely enclosing at least one digital display of the number of displays therein,
- a carrying part, such as a carrying strap, for allowing a user to carry the container, wherein the each secondary housing of the number of secondary housings comprises a viewing portion (8) for allowing the at least one digital display to be viewed therethrough by an outside observer, and wherein each secondary housing is reversibly lockable so that opening the secondary housing allows a user to access the at least one display for the removal thereof, and so that locking the secondary housing prevents the at least one display from being removed from the secondary housing. In this example it would be preferable that there were two carrying straps, and wherein one face of the container is arranged for resting against a part of the back of the user. It stands to reason that all previously mentioned options pertaining to the box, such as also mentioned in claims 2-9 are combinable as well as other mentioned options may be combined with this aspect. The container itself may be designed so that it does not exceed 15 kg, preferably 5-12kg. This allows it to remain portable over extended periods, especially when a user carries it while operating an L1-L5 category vehicle. After all, the user will be able to sit during the delivery while carrying the container on his or her back.

The invention will herein further be elucidated by means of the following figures:
- Figure 1A shows a schematic vertical cross-section of container according to the invention;
- Figure 1B shows a top down view of the container according to the invention;
- Figure 2 shows a schematic assembly according to the invention;
- Figure 3 shows a remote control system according to the invention; and
- Figure 4 shows a remote control system according to the invention.

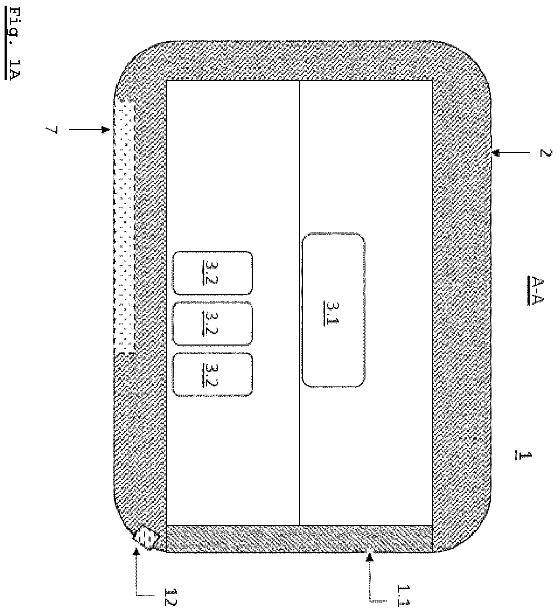

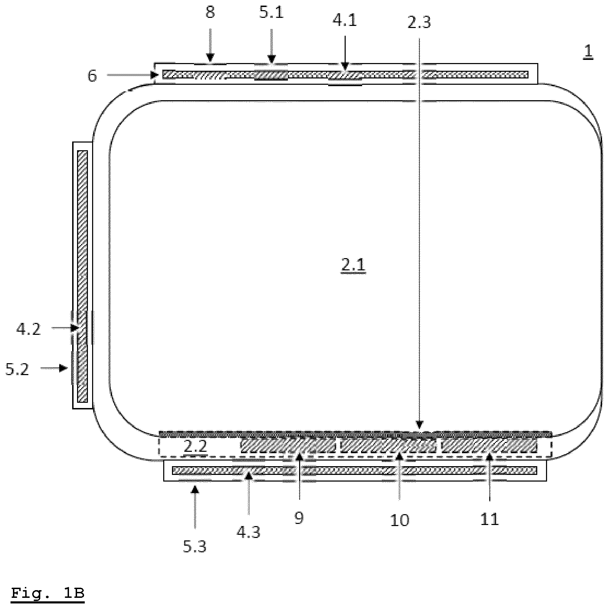

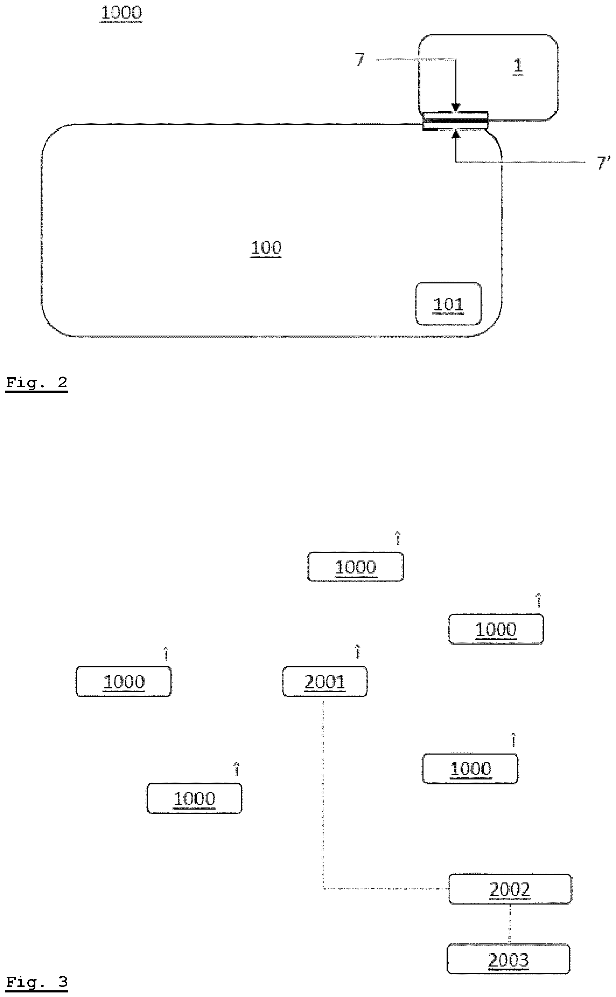

Figure 1A shows a schematic vertical cross-section of container 1 according to the invention. In this example the container is a food parcel transport container. That is to say the container has a main housing 2 which defines an inner volume for transporting food orders therein and has a door 1.1 that can be opened or closed to allow access to the inner volume. Figure 1 shows the presence of several food parcels 3.1, 3.2. Parcel 3.1 here represents a warm food item such as a pizza pie, whereas parcel 3.2 represents a cold food item, such as a soda beverage. These are stored separately within the inner volume in parts of the inner volume which are separated from each other. Figure 1B shows that the container also has a number of displays, namely three displays, 4.1, 4.2, 4.3. Also provided to the container are a number of secondary housings, in this example, also three, namely 5.1, 5.2, 5.3. Each secondary housing defines a pocket 6 for substantially entirely enclosing one of the digital display of the number of displays therein. It should be noted that it's also possible to have one secondary housing that is arranged for fitting more than one display, but such an example is not shown herein. It may even be possible for one such secondary housing to curve around or with the main housing such that only one secondary housing needed for three displays. Returning to Figure 1A a mounting part 7 can be identified for mounting the container to an L1-L5 category vehicle 100 or a bicycle (not shown, but customary). An assembly 1000 of vehicle 100 and container 1 is schematically shown in Figure 2. It is noted that the L1-L5 category vehicle is defined as per European Union Regulation 168/2013, namely one of (L1e-A) an electrically powered bicycle, (L1e-B) a two-wheel moped, (L2e) a three-wheel moped, (L3e) motorcycle, (L4e) a motorcycle with a side car, and (L5) a tricycle. Each secondary housing of the number of secondary housings is provided with a viewing portion 8 for allowing the display contained therein to be viewed therethrough. The viewing portion is in this example made of a transparent material which is preferably durable and somewhat flexible. Plexiglass, HDPE, PE, PET, PP and PS may be considered to form the viewing portion of a secondary housing. This may even, also separately from this example, be formed as a viewing port, that is to say a through hole. Each secondary housing is reversibly lockable so that opening the secondary housing allows a user to access the display that is placed therein for the removal thereof. The person skilled in the art will understand that there are many different ways to provide for a lockable secondary housing. In one example the secondary housing may be provided with a lockable door, in another example the secondary housing may be closed by means of a latch, and in yet another the viewing portion may be locked and tilted open to access the relevant pocket. In every option the secondary housing is lockable such that in the locked arrangement the secondary housing prevents the display from being removed therefrom. The displays as shown in Figure 1 may be any number of displays, such as an LED-display, OLED-display, LCD-screen, a plasma screen, a tablet, or an electronic photo albums. The display may be a smart display with its own central processing capabilities and memory, and/or it may be controlled centrally. In this example, although it is expressly optional, the container also has a mobile communication device, such a 3G, 4G and/or 5G telecom device 10, which is arranged for transmitting and receiving data via a the telephone network/ The device 10 is arranged for receiving digital content over a wireless connection. The container 1 further has a central controller 9 arranged for controlling the number of displays based on the received digital content. In this example a central power source 11, namely a lithium ion battery, for powering the displays 4.1, 4.2, 4.3, the communication device 10 and the central controller 9 is also present. However, it is alternatively possible to draw electrical power from a vehicle to which it is mounted, such as via a power connector, so that the container will not need an power source. The electrical power connector may be integrated with the mounting part 7 so that the container is connected to a power source immediately upon mounting to a vehicle. Both a power source and power connector may simultaneously, or alternatively to each other, be present. The inner volume of the main housing 2 is partitioned into an electronics compartment 2.1 and a parcel compartment 2.1 for separately storing the communication device and the central controller, and optionally the power source, from the parcels. The electronics compartment is accessible from the parcel compartment by a user via a removably securable panel 2.3 to the main housing. This panel shields the electronic equipment from spills. In Figure 1B the electronics compartment is shown to be provided in an upstanding wall of the container, however, it may alternatively also be provided in the ceiling or bottom. In the former case no downward leakage of parcels, such as parcels 3.2, may then reach the electronics systems under the influence of gravity. In Figure 1 A the container can also be seen to comprise a charging port 12, such as a USB-port on an outer part of the main housing, for charging external devices using the central power source. The port 12 has a removable cover (now shown, but customary) to protect it against outside influences.

Figure 2 shows the assembly 1000 of the vehicle 100 and the parcel transport container 1 as shown in Figure 1A and 1B. It can be seen that the container 1 is mounted to the vehicle 100 by two corresponding mounting parts 7, 7'. That is to say the mounting part 7 of the container is removably connectable with a corresponding mounting part 7' which is provided to the vehicle so that the container is fixed to the vehicle. The mounting part 7' of the vehicle 100 can be fixed behind a saddle (not shown, but customary) of the vehicle. Although only schematically shown in Figure 2 the vehicle is an L1-L5 category vehicle as per European Union Regulation 168/2013, this is to be understood as any one of an electrically powered bicycle, a two-wheel moped, a three-wheel moped, a motorcycle, a motorcycle with a side car, and a tricycle. In this example, the vehicle is two-wheeled moped with its own on board GPS-unit 101 for determining the geographical location of the assembly. That is to say, the GPS-unit is arranged to collect and transmit data pertaining to the location of the vehicle, and by extension the assembly, and communicate the information to a distant server (not shown, but customary) which stores the information and which server can be accessed by a user to determine the location. The server or GPS-unit may be arranged for time stamping the information so that the user may also determine the history of location can be determined by a user.

Figure 3 shows a remote control system 2000 for controlling the digital display of content for several assemblies 1000, that is to say containers 1 installed on a vehicle 100. In this example the system has a plurality of containers, wherein each container is a parcel transport container with a mobile communication device and a central controller. The system has a distant server or computer 2002 arranged for wirelessly communicating digital content and/or instructions, such as over a mobile communications network, to the mobile communication device of each of the parcel transport containers of the assemblies for controlling the content that is displayed thereon. Communications between an assembly and the distant server or computer 2002 is mediated by a wireless communication tower, such as a cellphone tower. In Figure 3 it can be seen that, in use, each assembly will communicate wirelessly l̂ with the wireless communication tower 2001 for receiving the digital content and/or instructions for the displaying thereof. In this example a user may interact with a user interface 2003 which is communicatively connected with the distant server or computer 2002 for allowing the user to provide instructions and content.

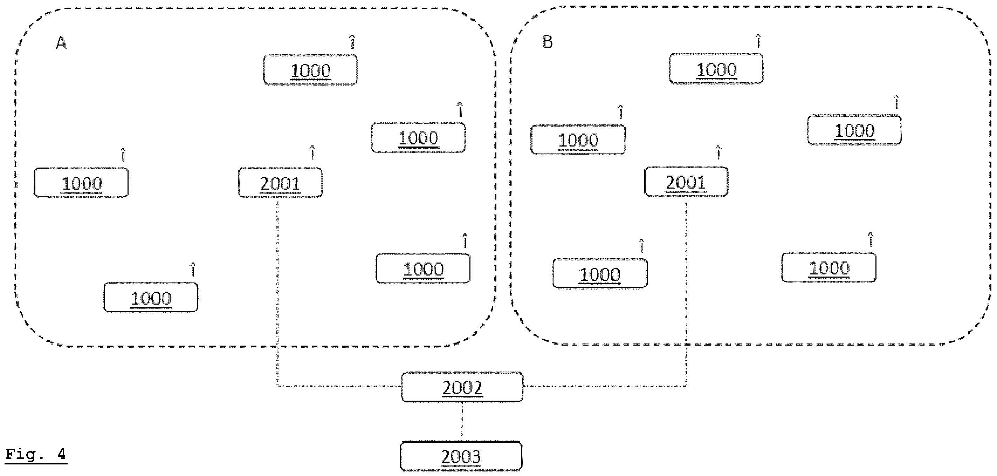

In Figure 4 the digital content consists of an image, and the instructions relate to a command for initiating the showing of the image depending on the physical location of the assembly. To this end the vehicle has a GPS-unit which is arranged to communicate the GPS data of the vehicle in real-time over either the same wireless network l̂ independently or another wireless network entirely. In this example assemblies in area A will show a first image, whereas assemblies in area B shows a second image different from the first image. Due to the fact that 5G has a very limited range, location may alternatively be determined by which tower 2001 an assembly is connected to. In such a case no GPS in necessary. Optionally, even a history of the towers which the assembly connected to may be saved by the distant server or computer to determine the travel history of the assembly.

## Claims

1. A food parcel transport container, comprising:
- a main housing (2) defining an inner volume suitable for transporting parcels (3.1, 3.2);
- a plurality of digital displays (4.1, 4.2, 4.3); and
- a plurality of secondary housings (5.1, 5.2, 5.3) each defining a pocket (6) for substantially entirely enclosing at least one digital display of the plurality of displays therein,
- a mounting part (7) for mounting the container to an L1-L5 category vehicle (100) or a bicycle, wherein each secondary housing of the number of secondary housings comprises a viewing portion (8) for allowing the at least one digital display to be viewed therethrough by an outside observer, and wherein each secondary housing is reversibly lockable so that opening the secondary housing allows a user to access the at least one display for the removal thereof, and so that locking the secondary housing prevents the at least one display from being removed from the secondary housing;
- a mobile communication device (10) arranged for receiving digital content over a wireless connection; and
- a central controller (9) arranged for the synchronous controlling of the plurality of displays based on the received digital content and instructions and
wherein the container is adapted to be part of a plurality of containers which display of content is centrally controlled from a distance,
wherein the container designed to be automatically time synchronized in the display of digital content with other containers in a swarm of multiple containers within a predetermined geographic area through communication with a central server, and wherein the container is designed to break synchronicity based on geographic area as a consequence of a user command through a human interface associated with central server so as to assume either a global synchronicity with all containers of the swarm or a temporary dyssynchronous individual show of content.

2. The container according to claim 1, wherein the main housing is designed as a substantially cubic food delivery box, and wherein the plurality of digital displays is equal to or fewer than the number of lateral faces of the main housing.

3. The container according to claim 1 or 2, comprising a central power source (11), namely a battery, for powering the plurality of displays, the communication device and the central controller and/or comprising a solar panel.

4. The container according to claim 3, furnished with a charging port on an outer part of the main housing, for charging external devices using the central power source.

5. The container according to claim 1, 2, 3 or 4, wherein the inner volume of the main housing is partitioned into an electronics compartment (2.1) and a parcel compartment (2.2) for separately storing the communication device and the central controller from the parcels, and wherein the electronics compartment is accessible from the parcel compartment by a user via a removably securable panel (2.3) to the main housing.

6. The container according to claim 5, wherein the panel comprises through-holes for allowing heat from the electronics compartment to dissipate into at least a part of the food compartment.

7. The container according to any one of the preceding claims 1-6, wherein the viewing portion is made of a transparent material.

8. The container according to any one of the preceding claims 1-7, wherein each of the number secondary housings is integrated with a lateral face of the main housing, such that the outer surfaces of the main housing are substantially flush with a corresponding outer surface of the secondary housings.

9. The container according to any one of the preceding claims 1-8, provided with a bumper, wherein the bumper extends outward from the container beyond the secondary housing.

10. The container according to any one of the preceding claims 1-9, wherein the main housing is designed as a food delivery box and wherein the number of digital displays is fewer than the number of lateral faces of the main housing, the remaining lateral face comprising a door for accessing the inner volume of the main housing, and wherein the number of secondary housings is equal to the number of displays, and wherein the container is designed for being assembled with the vehicle such that the door faces the user, thus having three advertising faces.

11. An assembly (1000) of a vehicle (100) and the parcel transport container (1) according to any one of claims 1-10, wherein the container (1) is mounted to the vehicle (100) or a bicycle, and wherein the vehicle (100) is an L1-L5 category vehicle as per European Union Regulation 168/2013, namely one of:
- (L1e-A) an electrically powered bicycle,
- (L1e-B) a two-wheel moped;
- (L2e) a three-wheel moped
- (L3e) motorcycle;
- (L4e) a motorcycle with a side car, and
- (L5) a tricycle.

12. The assembly according to claim 11, wherein the vehicle or the container comprises a GPS-unit for determining the geographical location of the assembly.

13. A remote control system (2000) for controlling the display of digital content by comprising:
- a swarm of containers, wherein each container of the swarm is a food parcel transport container according to at least claim 1; and
- a distant server (2002) arranged for wirelessly communicating digital content and/or instructions to the mobile communication device of each of the parcel transport containers for controlling the content that is displayed thereon,
wherein each container of the swarm relays geographical location information about said container to the distant server which is associated with a human interface, and wherein the distant server communicates the digital content and/or instructions to each container based on a change in its geographical location and/or time of day, and is designed so as to at least one of:
- allowing a user to track the movement of the swarm in a map or list, via the human interface (2003);
- allowing the user to manually select individual containers of the swarm and control the content that is displayed thereon, via the human interface;
- allowing the user to manually select multiple containers of the swarm and simultaneously control the content that is displayed thereon, via the human interface; and
- allow for content to be uploaded to the system and/or selected from within the system, wherein the human interface is designed to allow the user to set the geographical area and time period for which only those containers of the swarm will show said content for which the geographical location corresponds with the set geographical area and the time period.

14. The system according to claim 13, comprising a single switch, or digital representation of a switch, wherein the system is designed such that when pressed or selected by a user, the system synchronizes all containers in the swarm to show the same visual content.

15. The system according to claim 13 or 14, wherein the food parcel transport container is mounted to an L1-L5 category vehicle as per European Union Regulation 168/2013 comprising a GPS-unit, and wherein the distant server or computer is communicatively arranged with the GPS-unit for receiving the GPS information therefrom, such as a driven route over time.

## Patentansprüche

1. Lebensmittelpaket-Transportbehälter, umfassend:
- ein Hauptgehäuse (2), das ein Innenvolumen definiert und für den Transport von Paketen geeignet ist (3. 1, 3. 2);
- eine Vielzahl von digitalen Anzeigen (4.1, 4.2, 4.3); und
- eine Vielzahl von sekundären Gehäusen (5.1, 5.2, 5.3), die jeweils eine Tasche (6) definieren, um mindestens eine digitale Anzeige der Vielzahl von Anzeigen darin im Wesentlichen vollständig zu umschließen,
- ein Befestigungsteil (7) zum Befestigen des Behälters an einem Fahrzeug (100) der Kategorie L1 bis L5 oder einem Fahrrad, wobei jedes sekundäre Gehäuse der Anzahl von sekundären Gehäusen einen Betrachtungsabschnitt (8) umfasst, so dass die mindestens eine digitale Anzeige durch einen außen befindlichen Beobachter sichtbar ist, und wobei jedes sekundäre Gehäuse reversibel verschließbar ist, so dass durch das Öffnen des sekundären Gehäuses ein Benutzer auf die mindestens eine Anzeige zugreifen kann, um diese zu entfernen, und so dass durch das Verschließen des sekundären Gehäuses das Entfernen der mindestens einen Anzeige aus dem sekundären Gehäuse verhindert wird;
- eine mobile Kommunikationsvorrichtung (10), die dazu eingerichtet ist, digitale Inhalte über eine drahtlose Verbindung zu empfangen; und
- eine zentrale Steuerung (9), die dazu eingerichtet ist, die Vielzahl von Anzeigen basierend auf den empfangenen digitalen Inhalten und Anweisungen synchron zu steuern, und
wobei der Behälter dazu geeignet ist, Teil einer Vielzahl von Behältern zu sein, deren Anzeige des Inhalts zentral ferngesteuert wird,
wobei der Behälter dazu ausgelegt ist, zur Anzeige von digitalem Inhalt automatisch mit anderen Behältern in einem Schwarm von mehreren Behältern innerhalb eines vorbestimmten geografischen Gebiets durch Kommunikation mit einem zentralen Server zeitsynchronisiert zu werden, und wobei der Behälter dazu ausgelegt ist, die Synchronität basierend auf dem geografischen Gebiet infolge eines Benutzerbefehls durch eine menschliche Schnittstelle, die mit dem zentralen Server verbunden ist, zu unterbrechen, um entweder eine globale Synchronität mit allen Behältern des Schwarms oder eine vorübergehende nicht-synchrone individuelle Anzeige des Inhalts anzunehmen.

2. Behälter nach Anspruch 1, wobei das Hauptgehäuse als ein im Wesentlichen würfelförmiger Behälter zur Lieferung von Lebensmitteln ausgebildet ist und wobei die Anzahl der digitalen Anzeigen gleich oder geringer als die Anzahl der Seitenflächen des Hauptgehäuses ist.

3. Behälter nach Anspruch 1 oder 2, mit einer zentralen Stromquelle (11), nämlich einer Batterie, zur Versorgung der Vielzahl von Anzeigen, der Kommunikationsvorrichtung und der zentralen Steuerung und/oder mit einem Solarpanel.

4. Behälter nach Anspruch 3, der mit einem Ladeanschluss an einem äußeren Teil des Hauptgehäuses ausgestattet ist, um externe Geräte mit Hilfe der zentralen Stromquelle aufzuladen.

5. Behälter nach Anspruch 1, 2, 3 oder 4, wobei das Innenvolumen des Hauptgehäuses in ein Elektronikfach (2.1) und ein Paketfach (2.2) unterteilt ist, um die Kommunikationsvorrichtung und die zentrale Steuerung getrennt von den Paketen aufzubewahren, und wobei das Elektronikfach von dem Paketfach durch einen Benutzer über eine entfernbar befestigbare Platte (2.3) an dem Hauptgehäuse zugänglich ist.

6. Behälter nach Anspruch 5, wobei die Platte Durchgangslöcher aufweist, damit die Wärme aus dem Elektronikfach in mindestens einen Teil des Lebensmittelfachs abgegeben werden kann.

7. Behälter nach einem der vorangehenden Ansprüche 1 bis 6, wobei der Betrachtungsabschnitt aus einem transparenten Material hergestellt ist.

8. Behälter nach einem der vorhergehenden Ansprüche 1 bis 7, wobei jedes der mehreren Sekundärgehäuse in eine Seitenfläche des Hauptgehäuses integriert ist, so dass die Außenflächen des Hauptgehäuses im Wesentlichen bündig mit einer entsprechenden Außenfläche der Sekundärgehäuse sind.

9. Behälter nach einem der vorhergehenden Ansprüche 1 bis 8, wobei der Behälter mit einem sich vom Behälter nach außen über das Sekundärgehäuse hinaus erstreckenden Puffer versehen ist.

10. Behälter nach einem der vorhergehenden Ansprüche 1 bis 9, wobei das Hauptgehäuse als Behälter zur Lieferung von Lebensmitteln ausgebildet ist und wobei die Anzahl der digitalen Anzeigen geringer als die Anzahl der Seitenflächen des Hauptgehäuses ist, wobei die verbleibende Seitenfläche eine Tür für den Zugang zum Innenvolumen des Hauptgehäuses umfasst, und wobei die Anzahl der Sekundärgehäuse gleich der Anzahl der Anzeigen ist, und wobei der Behälter für die Montage mit dem Fahrzeug so ausgebildet ist, dass die Tür dem Benutzer zugewandt ist und somit drei Werbeflächen aufweist.

11. Baugruppe (1000) aus einem Fahrzeug (100) und dem Pakettransportbehälter (1) nach einem der Ansprüche 1-10, wobei der Behälter (1) an dem Fahrzeug (100) oder einem Fahrrad angebracht ist und wobei das Fahrzeug (100) ein Fahrzeug der Klasse L1-L5 gemäß der Verordnung (EU) Nr. 168/2013 ist, nämlich eines der folgenden:
- (L1e-A) ein elektrisch angetriebenes Fahrrad;
- (L2e-B) ein zweirädriges Moped;
- (Le) ein dreirädriges Moped;
- (L3e) ein Kraftrad;
- (L4e) ein Kraftrad mit einem Beiwagen; und
- (L5) ein Dreirad.

12. Baugruppe nach Anspruch 11, wobei das Fahrzeug oder der Behälter eine GPS-Einheit zur Bestimmung des geografischen Standorts der Baugruppe umfasst.

13. Fernsteuerungssystem (2000) zum Steuern der Anzeige eines digitalen Inhalts, umfassend:
- einen Schwarm von Behältern, wobei jeder Behälter des Schwarms ein Lebensmittelpaket-Transportbehälter gemäß mindestens Anspruch 1 ist; und
- einen entfernten Server (2002), der dazu eingerichtet ist, drahtlos digitale Inhalte und/oder Anweisungen an die mobile Kommunikationsvorrichtung jedes der Pakettransportbehälter zu übermitteln, um den darauf angezeigten Inhalt zu steuern,
wobei jeder Behälter des Schwarms geografische Standortinformationen über den Behälter an den entfernten Server übermittelt, der mit einer menschlichen Schnittstelle verbunden ist, und wobei der entfernte Server den digitalen Inhalt und/oder Anweisungen an jeden Behälter basierend auf einer Änderung seines geografischen Standorts und/oder der Tageszeit übermittelt und ausgelegt ist, mindestens zum:
- Veranlassen, dass der Benutzer die Bewegung des Schwarms in einer Karte oder Liste über die menschliche Schnittstelle (2003) verfolgen kann;
- Veranlassen, dass der Benutzer einzelne Behälter des Schwarms manuell auswählen und den darauf angezeigten Inhalt über die menschliche Schnittstelle steuern kann;
- Veranlassen, dass der Benutzer mehrere Behälter des Schwarms manuell auswählen und gleichzeitig den darauf angezeigten Inhalt über die menschliche Schnittstelle steuern kann; und
- Veranlassen, dass Inhalte in das System hochgeladen und/oder aus dem System ausgewählt werden, wobei die menschliche Schnittstelle derart ausgelegt ist, um zu veranlassen, dass der Benutzer das geografische Gebiet und den Zeitraum einstellt, für die nur diejenigen Behälter des Schwarms die Inhalte zeigen, deren geografischer Standort mit dem eingestellten geografischen Gebiet und dem Zeitraum übereinstimmt.

14. System nach Anspruch 13 umfassend einen einzelnen Schalter oder die digitale Darstellung eines Schalters, wobei das System derart ausgelegt ist, dass beim Drücken oder Auswählen durch einen Benutzer das System alle Behälter im Schwarm synchronisiert, um denselben visuellen Inhalt anzuzeigen.

15. System nach Anspruch 13 oder 14, wobei der Lebensmittelpaket-Transportbehälter an einem eine GPS-Einheit umfassenden Fahrzeug der Kategorie L1 bis L5 gemäß der Verordnung (EU) Nr. 168/2013 angebracht ist und wobei der entfernte Server oder Computer in Kommunikation mit der GPS-Einheit steht, um die GPS-Informationen von dieser zu empfangen, wie beispielsweise eine gefahrene Route im Zeitverlauf.

## Revendications

1. Conteneur de transport de colis alimentaires, comprenant :
- un logement principal (2) définissant un volume interne approprié pour transporter des colis (3.1, 3.2) ;
- une pluralité de dispositifs d'affichage numérique (4.1, 4.2, 4.3) ; et
- une pluralité de logements secondaires (5.1, 5.2, 5.3) définissant chacun une poche (6) destinée à contenir sensiblement entièrement au moins un dispositif d'affichage numérique de la pluralité de dispositifs d'affichage numérique dans celle-ci,
- une partie de montage (7) pour monter le conteneur sur un véhicule de catégorie L1-L5 (100) ou un vélo, dans lequel chaque logement secondaire du nombre de logements secondaires comprend une partie de visualisation (8) pour permettre à l'au moins un dispositif d'affichage numérique d'être visualisé à travers celle-ci par un observateur extérieur, et dans lequel chaque logement secondaire peut être verrouillé de manière réversible de sorte que l'ouverture du logement secondaire permette à un utilisateur d'accéder à l'au moins un dispositif d'affichage pour procéder au retrait de celui-ci, et de sorte que le verrouillage du logement secondaire empêche l'au moins un dispositif d'affichage d'être retiré du logement secondaire ;
- un dispositif de communication mobile (10) agencé pour recevoir un contenu numérique sur une connexion sans fil ; et
- un dispositif de commande central (9) agencé pour la commande synchrone de la pluralité de dispositifs d'affichage sur la base du contenu numérique reçu et d'instructions et
dans lequel le conteneur est adapté pour faire partie d'une pluralité de conteneurs dont l'affichage du contenu est commandé de façon centralisée à distance,
dans lequel le conteneur est conçu pour être automatiquement synchronisé dans le temps lors de l'affichage du contenu numérique avec d'autres conteneurs dans un essaim de multiples conteneurs à l'intérieur d'une zone géographique prédéterminée par communication avec un serveur central, et dans lequel le conteneur est conçu pour mettre fin à la synchronicité sur la base d'une zone géographique à la suite d'une commande utilisateur par le biais d'une interface humaine associée à un serveur central de façon à adopter soit une synchronicité globale avec tous les conteneurs de l'essaim, soit un affichage synchronisé individuel temporaire du contenu.

2. Conteneur selon la revendication 1, dans lequel le logement principal est conçu comme une boîte de livraison d'aliments sensiblement cubique, et dans lequel le nombre de la pluralité de dispositifs d'affichage numérique est inférieur ou égal au nombre de faces latérales du logement principal.

3. Conteneur selon la revendication 1 ou 2, comprenant une source d'alimentation centrale (11), à savoir une batterie, pour alimenter la pluralité de dispositifs d'affichage, le dispositif de communication et le dispositif de commande central et/ou comprenant un panneau solaire.

4. Conteneur selon la revendication 3, doté d'un port de charge sur une partie externe du logement principal, pour charger des dispositifs externes en utilisant la source d'alimentation centrale.

5. Conteneur selon la revendication 1, 2, 3 ou 4, dans lequel le volume interne du logement principal est divisé en un compartiment électronique (2.1) et un compartiment à colis (2.2) pour stocker le dispositif de communication et le dispositif de commande central séparément des colis, et dans lequel le compartiment électronique est accessible à partir du compartiment à colis par un utilisateur par le biais d'un panneau (2.3) pouvant être fixé de manière amovible au logement principal.

6. Conteneur selon la revendication 5, dans lequel le panneau comprend des trous traversants pour permettre à la chaleur provenant du compartiment électronique de se dissiper dans au moins une partie du compartiment à aliments.

7. Conteneur selon l'une quelconque des revendications 1 à 6 précédentes, dans lequel la partie de visualisation est constituée d'un matériau transparent.

8. Conteneur selon l'une quelconque des revendications 1 à 7 précédentes, dans lequel chacun du nombre de logements secondaires est intégré à une face latérale du logement principal, de sorte que les surfaces externes du logement principal soient sensiblement au même niveau qu'une surface externe correspondante des logements secondaires.

9. Conteneur selon l'une quelconque des revendications 1 à 8 précédentes, doté d'un pare-chocs, dans lequel le pare-chocs s'étend vers l'extérieur à partir du conteneur au-delà du logement secondaire.

10. Conteneur selon l'une quelconque des revendications 1 à 9 précédentes, dans lequel le logement principal est conçu comme une boîte de livraison d'aliments et dans lequel le nombre de dispositifs d'affichage numérique est inférieur au nombre de faces latérales du logement principal, la face latérale restante comprenant une porte pour accéder au volume interne du logement principal, et dans lequel le nombre de logements secondaires est égal au nombre de dispositifs d'affichage, et
dans lequel le conteneur est conçu pour être assemblé avec le véhicule de sorte que la porte fasse face à l'utilisateur, ayant ainsi trois faces publicitaires.

11. Ensemble (1000) constitué d'un véhicule (100) et du conteneur de transport de colis (1) selon l'une quelconque des revendications 1 à 10, dans lequel le conteneur (1) est monté sur le véhicule (100) ou un vélo, et dans lequel le véhicule (100) est un véhicule de catégorie L1-L5 conformément au Règlement 168/2013 de l'Union européenne, à savoir l'un parmi :
- (L1e-A) un vélo à moteur ;
- (L1e-B) un cyclomoteur à deux roues ;
- (L2e) un cyclomoteur à trois roues ;
- (L3e) un motocycle ;
- (L4e) un motocycle avec side-car ; et
- (L5) un tricycle.

12. Ensemble selon la revendication 11, dans lequel le véhicule ou le conteneur comprend une unité GPS pour déterminer l'emplacement géographique de l'ensemble.

13. Système de commande à distance (2000) pour commander l'affichage d'un contenu numérique en comprenant :
- un essaim de conteneurs, dans lequel chaque conteneur de l'essaim est un conteneur de transport de colis alimentaires selon au moins la revendication 1 ; et
- un serveur distant (2002) agencé pour communiquer sans fil un contenu numérique et/ou des instructions au dispositif de communication mobile de chacun des conteneurs de transport de colis pour commander le contenu qui est affiché sur celui-ci,
dans lequel chaque conteneur de l'essaim transmet des informations d'emplacement géographique au sujet dudit conteneur au serveur distant qui est associé à une interface humaine, et dans lequel le serveur distant communique le contenu numérique et/ou les instructions à chaque conteneur sur la base d'un changement de son emplacement géographique et/ou du moment de la journée, et est conçu de façon à effectuer au moins l'une des opérations suivantes :
- autoriser un utilisateur à suivre le déplacement de l'essaim sur une carte ou dans une liste, par le biais de l'interface humaine (2003) ;
- autoriser l'utilisateur à sélectionner manuellement des conteneurs individuels de l'essaim et à commander le contenu qui est affiché sur ceux-ci, par le biais de l'interface humaine ;
- autoriser l'utilisateur à sélectionner manuellement de multiples conteneurs de l'essaim et à commander simultanément le contenu qui est affiché sur ceux-ci, par le biais de l'interface humaine ; et
- autoriser le chargement d'un contenu dans le système et/ou sa sélection dans le système, dans lequel l'interface humaine est conçue pour autoriser l'utilisateur à définir la zone géographique et la période de temps pour lesquelles uniquement ces conteneurs de l'essaim afficheront ledit contenu pour lequel l'emplacement géographique correspond à la zone géographique et à la période de temps définies.

14. Système selon la revendication 13, comprenant un commutateur unique, ou la représentation numérique d'un commutateur, dans lequel le système est conçu de sorte que, lorsqu'il est actionné ou sélectionné par un utilisateur, le système synchronise tous les conteneurs dans l'essaim afin qu'ils affichent le même contenu visuel.

15. Système selon la revendication 13 ou 14, dans lequel le conteneur de transport de colis alimentaires est monté sur un véhicule de catégorie L1-L5 conformément au Règlement 168/2013 de l'Union européenne comprenant une unité GPS, et dans lequel le serveur distant ou un ordinateur est agencé en communication avec l'unité GPS pour recevoir les informations GPS provenant de celle-ci, telles qu'un itinéraire emprunté au fil du temps.
